**Europäisches Patentamt**

**European Patent Office**

**Office européen des brevets**

(11) Publication number: **0 264 998**
**B1**

(12) EUROPEAN PATENT SPECIFICATION

(45) Date of publication of the patent specification:
**19.09.90**

(21) Application number: **87201910.4**

(22) Date of filing: **06.10.87**

(51) Int. Cl.⁵: **E02D 37/00, E02D 35/00**

(54) Method of manufacturing a foundation.

(30) Priority: **06.10.86 NL 8602512**
**03.03.87 NL 8700512**

(43) Date of publication of application:
**27.04.88 Bulletin 88/17**

(45) Publication of the grant of the patent:
**19.09.90 Bulletin 90/38**

(84) Designated Contracting States:
**AT BE CH DE ES FR GB GR IT LI LU NL SE**

(56) References cited:
**FR-A- 1 423 742**
**FR-A- 2 370 130**
**US-A- 4 567 708**

(73) Proprietor: **Ballast-Nedam Groep N.V., Laan van Kronenburg 2, NL-1183 AS Amstelveen(NL)**

(72) Inventor: **Van Bijsterveld, Jacobus Johannes, Mimosadreef 4, NL-2631 HZ Nootdorp(NL)**

(74) Representative: **Konings, Lucien Marie Cornelis Joseph et al, OCTROOIBUREAU ARNOLD & SIEDSMA Sweelinckplein 1, NL-2517 GK Den Haag(NL)**

## Description

The invention relates to a method of manufacturing a foundation, whereby expansion concrete comprising calcium sulpho-aluminate is put into the ground which expansion concrete in the case of free expansion would have a linear expansion of at least 5%; which method is disclosed in FR-A 2 370 130 with reference to fig. 4. In said disclosed method a mass of expansion concrete is put into a hollow under a prefabricated foundation tube of reinforced concrete. The expansion concrete is only put under the foundation tube and in the bottom end of this foundation tube. The expansion concrete is used in order to repair the ground condition which will be destroyed to some extent by digging a hollow therein for insertion of the foundation tube. The expansion concrete will expand but mainly in upward direction where it is not counteracted.

The present invention has the object to improve the foundation substantially. To this aim the characterising feature of claim 1 is applied.

It is noted that in FR-A 2 370 130 with reference to fig. 5 a method is applied in which gas concrete is put into the ground and wherein during the setting substantial expansion of this gas concrete is prevented in all directions. With gas concrete it is impossible to bring the ground under substantial pressure as the compressibility of gas prevents the formation of gas bubbles of substantial dimensions.

A method for manufacturing a foundation, whereby expanding material is put into the ground is also known from US 3 504 497. In this method proposed in 1966 an expanding material is employed which in the case of free expansion has a maximum of 4,4% linear expansion. Added to the concrete mortar for this purpose is 33,6% calcium sulpho-aluminate cement which is a component causing expansion. This results in a driven concrete pile cast in the ground having some greater bearing capacity than concrete piles made of normal concrete but they have little bearing capacity in comparison with piles having foundations made according to the present invention.

Particularly suitable as expansion concrete is for example a mixture of sand, gravel, water, cement with an additive substance of calcium sulpho-aluminate for the forming of ettringite and/or magnesium oxide MgO for the purpose of hydration.

Calcium sulpho-aluminate is an additive substance for the realizing of concrete expansion or for compensating concrete shrink per se known as C.S.A., which is bought on the market under the brand name Dilacon by the Italian firm Enichem Anic of Milan. This additive which has a very strong expanding action compared to calcium sulpho-aluminate cement, is added in very small quantity to concrete mortar, as an overdose can cause the concrete to burst apart. Contrary hereto in accordance with the invention, much of this C.S.A. is added to concrete mortar that is to be placed in the ground, taking into account the fact that during setting the concrete in the ground undergoes expansion which displaces the surrounding earth and therefore imposes a compression on the ground. The reaction compression applied by the ground to the concrete holds the concrete under compression, which prevents the concrete bursting apart.

Situations are conceivable where the earth is so loose that the pressure build-up caused is small. The concrete mortar with a considerable dose of C.S.A. will then expand very strongly and could burst apart. In this use of the invention even loose ground is still placed under pressure to some extent owing to the great extent of forced displacement, while the concrete which has burst into pieces still has a per se greater ridigity than the surrounding earth and thus functions very well in this position as foundation material.

Conceivable here is the injecting of concrete mortar with much C.S.A. into loose ground under buildings which have the tendency to subside. This can be carried out easily at any random level, even beneath an already existing foundation element and an already existing building structure which has settled out of level, without damaging the building and/or adjacent buildings and without causing much inconvenience. The method according to the invention is therefore eminently suitable for renovation of old town and city centres. In order to increase the bearing capacity of a foundation pile, expanding material can first be placed in the ground and the foundation pile can then be inserted into the ground onto the expanding material. Thus created is a broad pile foot, as it were, which is rigidly anchored in the ground. A foundation pile with foot can if required be manufactured from one piece of expanding material, for example expanding concrete. Brought about in this case is not only a foot that is well anchored in solid ground, but also a substantial adhering of the pile to the often somewhat looser ground located at higher levels.

The invention will be elucidated in the description following hereinafter with reference to a drawing.

In the drawing in diagrammatic form:

Fig. 1, 2, 3 and 4 show respectively a building which has settled out of level, a pile foundation, a road and a railway, whereby the invention is applied,

fig. 5-8 each show another method according to the invention in successive steps, and

fig. 9 and 10 constructions with a foundation according to the invention, whereby tie members are used as foundation elements.

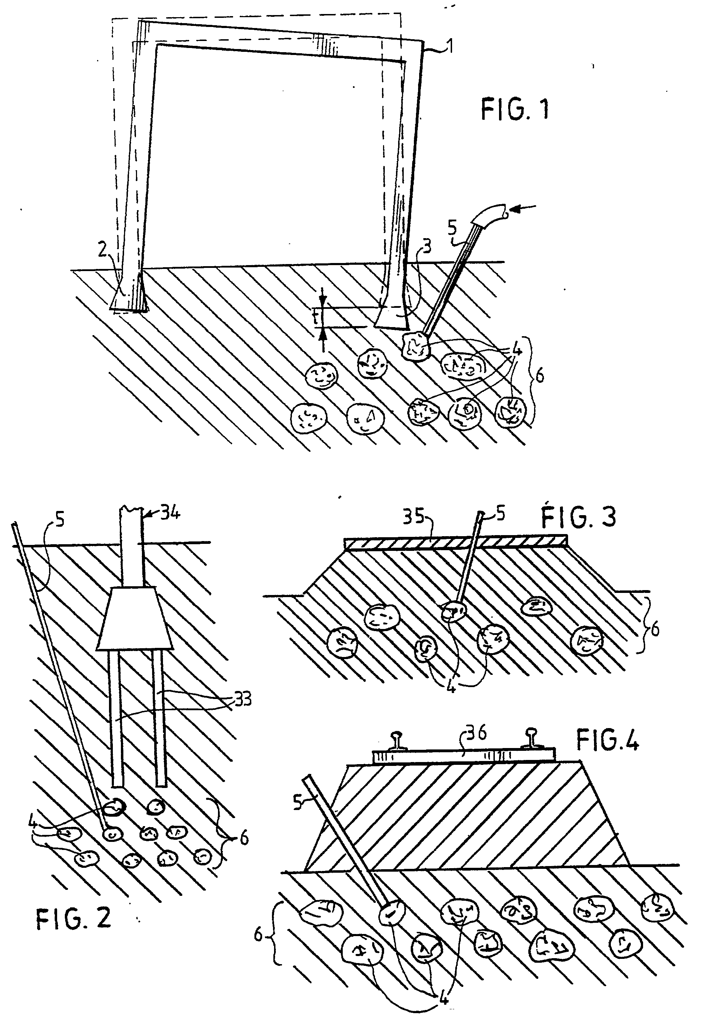

In accordance with fig. 1 a building structure 1 drawn with full lines which has settled out of level and which rests on foundation elements 2 and 3 is moved into the position drawn in dashed lines by injecting expanding material 4 into the ground via an injecting pipe 5 so that it is distributed through the ground in different places under foundation element 3. The quantity and type of expanding material is thereby chosen such that the building structure rises the required measure $t$ at that location. Should the required lifting measure $t$ not be achieved initially, then a further quantity of expanding material can be injected into the soil beneath the body of earth 6 of the ground improved with the expanding material 4, in order to carry out the desired correction.

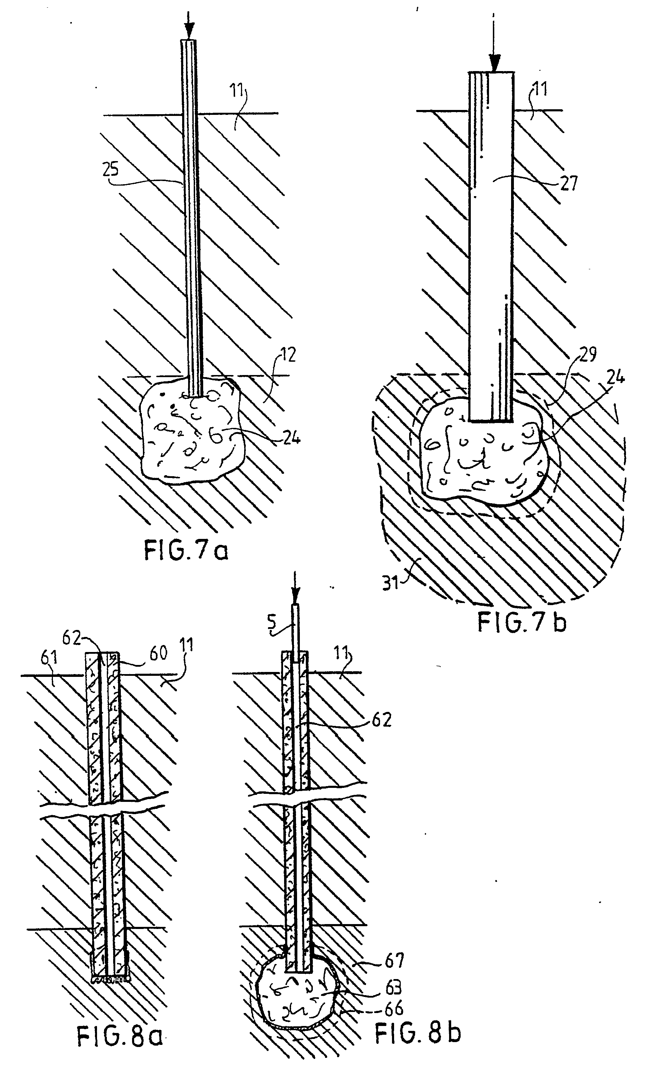

It is noted that it is not always necessary for an old building structure to be set entirely straight. It can in particular circumstances be preferable to preserve a certain measure of tilt. It is even conceivable that only so little expanding material is injected that the building structure all but maintains its position and that the injection aims to prevent further subsidence. It is also conceivable in the case of a wholly subsided building to apply the necessary foundation of expanding material around it, that is, by injection of expanding material under the entire edge foundation of the building structure. Thus is created a broad pile foot 29 having around it a zone 31 of compressed earth, that is, earth with bearing strength (see fig. 7b), which forms part of an improved body of earth, that is, a body of earth into which expanding material has been injected. As a result of the swelling of the expanding material the surrounding earth is put under pressure, which causes the bearing capacity of this earth to increase. While in fig. 1 the body of earth 6 is manufactured according to the invention underneath a ridge-like foundation element 3 of an already existing building structure 1 it is also conceivable to manufacture a similar body of earth 6 under foundation piles 33 of a building structure 34 (fig. 2), under a road surface 35 (fig. 3) or under a railway track 36 (fig. 4) in the case where local subsidences have to be corrected.

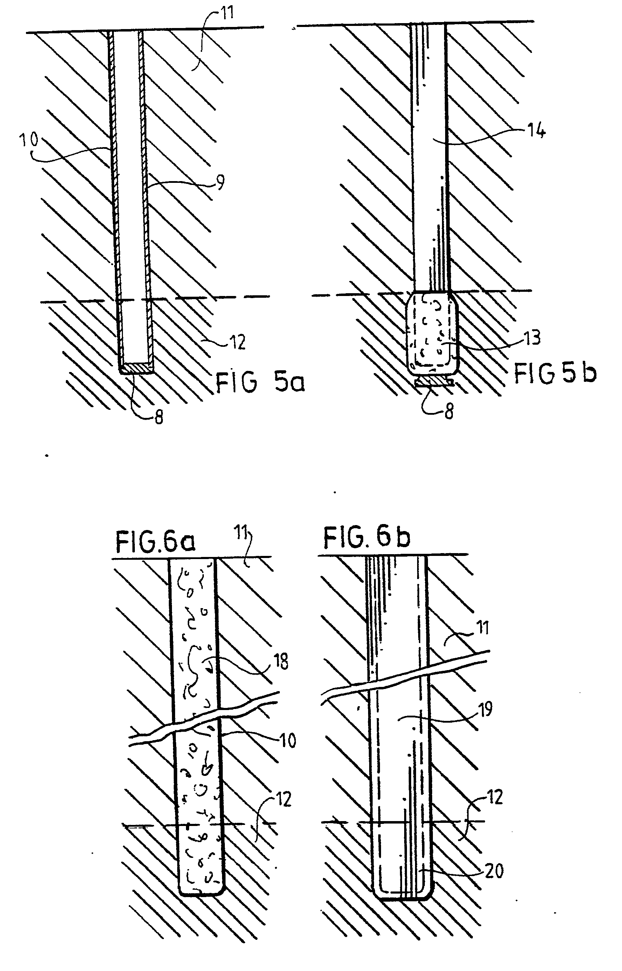

As according to fig. 5a a hollow 10 is formed in the ground through a layer of loose soil 11 into a more stable layer of earth 12. To this end a pipe 7 with a separate bottom cover 8 is driven into the ground as according to fig. 5a. While pipe 7 is being withdrawn, leaving the cover 8 behind in the ground, expanding material 13 is then poured into the lower end of hollow 10 at the point of ground layer 12, which material expands from the configuration drawn in dashed lines into that drawn with full lines. Above this a concrete foundation pile 14 of normal concrete is subsequently formed by casting concrete mass into the hole 10. This results in the configuration of fig. 5b.

As according to fig. 6a a concrete pile is manufactured in the ground by means of an auger drill or bucket excavator. Expanding material 18 is thereby applied over the whole length of the bore hole 10, so that there results finally as according to fig. 6b a thicker foundation pile 19 of hardened expanding material which has a good sticking adhesion to the surrounding loose earth 11 which is under pressure, while the pile foot 20 rests on stable ground 12.

In accordance with fig. 7a expanding material 24 is injected via an injecting pipe 25 through the loose earth layer 11 into the more stable ground layer 12. A pile 27 is then driven into the ground as according to fig. 7b into the mass of expanding material 24 placed in the ground beforehand and not yet hardened.

As in fig. 8a a foundation pile 60 is first placed into the ground 61, this foundation pile 60 being provided with an injecting pipe 62 and on its bottom with a sack 64 of rubber or plastic. Expanding material 63 is subsequently injected as according to fig. 8b via pipe 62, which results in a foundation pile foot 66 in the inflated sack 64 standing in compressed earth 67.

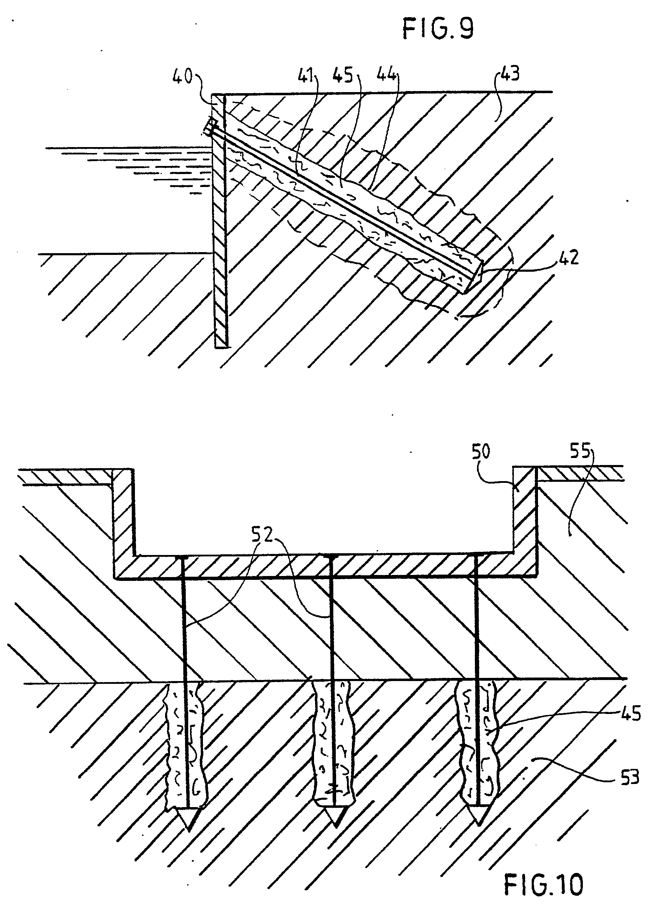

In accordance with fig. 9 an earth barrier 40 is supported by means of a tie member 41 consisting of a steel profile, for example tubing or I-profile with an anchor 42 at its end, this tie member being located inclining downward in a parcel of earth 43. This tie member 41 can be accommodated in a bore hole 44 that is filled with expanding material 45. The tensioning capacity of this tie member 41 is considerably enlarged, since it is situated in surrounding earth that is compressed.

According to fig. 10 a swimming bath 50 is anchored in loose earth 55 by means of vertical tie rods 52, the bottom ends of which are located in solid ground 53, where they are encased with expanding material 45. This anchoring prevents the empty swimming bath rising up in the loose earth 55.

It is remarked that expanding concrete is per se known in the manufacture of surface concrete constructions. An addition substance of 20-60 kg. of calcium sulpho-aluminate is thereby added to a 1 cubic metre mix of sand, gravel, water and cement. The free linear expansion thereby realised amounts to 0.1-1.0%. The purpose of this swelling is to prevent crack forming as a consequence of shrink and expansion stresses. As a result of the swelling the reinforcement is tensioned slightly, which results in a certain pre-stressing which resists concrete cracking. In short, the known use of expanding concrete with C.S.A. has the purpose of preventing cracks in concrete, or in other words to improve the condition of the concrete. Proposed in accordance with the current invention is the use of a dose of C.S.A. additive of at least 70, and preferably 100-200 kg/m³, which results in the concrete expansion being considerable, that is, at least 1%, and preferably 2-8%, linear expansion in the compressed ground. The addition is dosed such that a like addition in concrete with free expansion potential would result in bad concrete. As the concrete in the ground is enclosed on all sides by earth, the concrete itself is subjected to compression. As a result, even with this considerable additive dosage, the condition of the concrete is nevertheless good. In solid ground a linear expansion of 1% could be sufficient to place this ground under compression such that the bearing capacity is significantly improved. It is noted that a pile created in a drilled hole by placing mortar in the bore hole generally has a lesser bearing capacity than a driven pile, which supports in earth that is compressed as a result of the driving. A non-driven pile can be manufactured by applying the current invention, this pile having the advantages of the driven pile but not its drawbacks. The disadvantage of driving, such as noise and the shaking of surrounding building structures, is avoided if expanding mortar is cast in a bore hole, whereby the compression in the ground is realized as a result of expansion.

The additive substance can be so excessively dosed that the concrete condition becomes per se poor, and can even become so poor that the concrete mass injected into the ground falls apart as lumps. This has been found not to be a drawback per se, when this crumbled concrete mass has at least the bearing capacity of the surrounding soil type, and the bearing capacity of the surrounding soil type is improved. Since this earth is compressed because of the concrete injection, a significant improvement is already realized. It is otherwise easy using a crumbled expanding concrete mass to far surpass the bearing capacity of the surrounding earth. The required interior angle of friction of 35° is easy to realize for the expanded concrete, even in the case where for example 1200 kg. of additive is added per cubic metre of concrete mix in order to effect a linear expansion in the order of magnitude of 25%. The following abbreviations are used in the examples in the table following hereinafter:

PC-A Portland cement class A from ENCI in Maastricht;
CSA Calcium sulpho-aluminate of the brand "Dilacon" from Enichem Anic of Milan;
sand Netherlands moulding sand NEN 3550

| composition (parts by mass) | | | | | free linear expansion % | expansion in ground at ground pressure % | ground pressure (M Pa) |
|---|---|---|---|---|---|---|---|
| PC-A | CSA | CaO | sand | water | | | |
| 85 | 15 | – | – | 32 | > 15 | 3 | 6 |
| 80 | 20 | – | – | 32 | > 15 | 6.5 | 14 |
| 50 | 50 | – | – | 32 | > 15 | 13 | 1.4 |
| 80 | 10 | 10 | – | 32 | 6 | – | – |
| 85 | 15 | – | 237 | 40 | 7 | 4.5 | 0.04 |
| 80 | 20 | – | 237 | 40 | 9 | 5 | 0.05 |
| 80 | 20 | – | 237 | 40 | 9 | 3.5 | 0.2 |
| 80 | 20 | – | 237 | 40 | 9 | 2 | 0.14 |
| 75 | 25 | – | 237 | 40 | 10 | 6 | 0.06 |
| 100 | 20 | – | 156 | 43 | > 15 | 10 | 0.1 |
| 80 | 20 | – | 173 | 36 | 6 | 4 | 0.04 |

The expansion grout with constituents by mass PC-A : 50, CSA : 50 and water : 32 with considerable swelling is particularly applicable around the bottom end of a prefab concrete driven pile, whereby as a result of compressing of the ground a considerable friction force is applied to the pile.

## Claims

1. Method of manufacturing a foundation, wherein expansion concrete comprising calcium sulpho-aluminate is put into the ground, which expansion concrete in the case of free expansion would have a linear expansion of at least 5%, characterized in that during the setting the expansion concrete is so held under compression in all directions that bursting apart of this concrete is prevented.

2. Method as claimed in claim 1 characterized in that the material of a pile is put into the ground up to contact with the still unset expansion concrete.

3. Method as claimed in claim 1 or 2 characterized in that a prefabricated pile is driven into the ground up to contact with the still unset expansion concrete.

4. Method as claimed in claim 1 or 2 characterized in that the concrete of a pile is put into the ground above and in contact with the still unset expansion concrete.

5. Method as claimed in claim 1 characterized in that the expansion concrete is injected into the ground through a channel under said pile, said pile holding the expansion concrete under compression during its setting.

6. Method as claimed in claim 1 characterized in that the expansion concrete is injected into the ground above an anchor and around a tie member.

7. Method as claimed in claim 1 characterized in that the expansion concrete is under pressure injected into the ground through an injection tube.

8. Method of manufacturing a foundation under an in existing building, wherein expansion concrete comprising calcium sulpho-aluminate is injected into the ground for increasing the compression of the ground under an existing building, which expansion concrete in the case of free expansion would have a linear expansion of at least 5%.

9. Method as claimed in any of the foregoing claims, characterized in that expanding material is employed which consists of a concrete mixture with so much additive substance that a linear expansion of at least 1% is achieved in compressed ground.

10. Method as claimed in claim 9, characterized in that at least 70 kg. of calcium sulpho-aluminate is added per cubic meter of concrete mortar.

11. Method as claimed in claim 9 or 10, characterized in that per cubic meter of concrete mortar a quantity of calcium sulpho-aluminate is added in the order of magnitude of 1000 kg.

12. Method as claimed in any of the foregoing claims, characterized in that an expanding concrete is used with a free linear expansion in the order of magnitude of 25%.

**Patentansprüche**

1. Verfahren zum Herstellen eines Fundaments, bei dem expandierbarer Beton, der Calcium-Sulfoaluminat enthält, in das Erdreich eingeführt wird, wobei der expandierbare Beton bei freier Expandierung eine lineare Expansion um mindestens 5% aufweisen würde, dadurch gekennzeichnet, daß der expandierbare Beton während dem Aushärten derart in allen Richtungen unter Kompression gehalten wird, daß ein Auseinanderbersten dieses Betons verhindert wird.

2. Verfahren nach Anspruch 1, dadurch gekennzeichnet, daß das Material eines Blocks in das Erdreich bis zum Kontakt mit dem noch nicht ausgehärteten expandierbaren Beton gebracht wird.

3. Verfahren nach Anspruch 1 oder 2, dadurch gekennzeichnet, daß ein vorgefertigter Block in das Erdreich bis zum Kontakt mit dem noch nicht ausgehärteten expandierbaren Beton gebracht wird.

4. Verfahren nach Anspruch 1 oder 2, dadurch gekennzeichnet, daß der Beton eines Blocks oberhalb und in Kontakt mit dem noch nicht ausgehärteten expandierbaren Beton in das Erdreich gebracht wird.

5. Verfahren nach Anspruch 1, dadurch gekennzeichnet, daß der exandierbare Beton durch einen Kanal unter dem Block in das Erdreich eingeführt wird, wobei der Block den expandierbaren Beton während dem Aushärten unter Kompression hält.

6. Verfahren nach Anspruch 1, dadurch gekennzeichnet, daß der expandierbare Beton oberhalb eines Ankers und um eine Halteelement herum in das Erdreich eingeführt wird.

7. Verfahren nach Anspruch 1, dadurch gekennzeichnet, daß der expandierbare Beton durch ein Injektionsrohr unter Druck in das Erdreich eingeführt wird.

8. Verfahren zum Herstellen eines Fundaments unter einem bestehenden Gebäude, bei dem expandierbarer Beton, der Calcium-Sulfoaluminat enthält, in das Erdreich eingeführt wird, um die Kompression des Erdreichs unter einem bestehenden Gebäude zu erhöhen, wobei dieser expandierbare Beton bei freier Expandierung eine lineare Expansion um mindestens 5% aufweisen würde.

9. Verfahren nach jedem der vorstehenden Patentansprüche dadurch gekennzeichnet, daß expandierendes Material verwendet wird, welches aus einem Betongemisch mit soviel Zusatzsubstanz besteht, daß in zusammengepreßtem Erdreich eine lineare Expansion von wenigstens 1% erzielt wird.

10. Verfahren nach Anspruch 9, dadurch gekennzeichnet, daß wenigstens 70 kg Calcium-Sulfoaluminat pro Kubikmeter Betonmörtel zugesetzt sind.

11. Verfahren nach Anspruch 9 oder 10, dadurch gekennzeichnet, daß pro Kubikmeter Betonmörtel eine Menge Calcium-Sulfoaluminat im Bereich von 1000 kg zugesetzt ist.

12. Verfahren nach jedem der vorstehenden Patentansprüche dadurch gekennzeichnet, daß daß ein expandierbarer Beton mit einer freien linearen Expansion im Bereich von 25% verwendet wird.

## Revendications

1. Procédé de réalisation d'une fondation, dans lequel on coule dans le sol un béton expansible contenant du sulfo-aluminate de calcium, ce béton expansible ayant une dilatation linéaire d'au moins 5% dans des conditions de dilatation libre, caractérisé en ce que, pendant la prise, le béton expansible est maintenu sous compression dans totues les directions de telle manière que l'éclatement du béton soit empêchée.

2. Procédé selon la revendication 1, caractérisé en ce que la matière d'un pieu est coulée dans le sol jusqu'à ce qu'elle entre en contact avec le béton expansible qui n'a pas encore fait sa prise.

3. Procédé selon la revendication 1 ou 2, caractérisé en ce qu'un pieu préfabriqué est enfoncé dans le sol jusqu'à ce qu'il entre en contact avec le béton expansible qui n'a pas encore fait sa prise.

4. Procédé selon la revendication 1 ou 2, caractérisé en ce que le béton d'un pieu est coulé dans le sol au-dessus du béton expansible qui n'a pas encore fait sa prise, et mis en contact avec ce béton.

5. Procédé selon la revendication 1, caractérisé en ce que le béton expansible est injecté dans le sol à travers un canal au-dessous dudit pieu, ledit pieu maintenant le béton expansible sous compression pendant sa prise.

6. Procédé selon la revendication 1, caractérisé en ce que le béton expansible est injecté dans le sol au-dessus d'une ancre et autour d'un tirant.

7. Procédé selon la revendication 1, caractérisé en ce que le béton expansible est injecté sous pression dans le sol à travers un tube d'injection.

8. Procédé de réalisation d'une fondation sous un bâtiment existant, dans lequel du béton expansible contenant du sulfo-aluminate de calcium est injecté dans le sol pour accroître la compression du sol sous un bâtiment existant, ce béton expansible possédant une dilatation linéaire d'au moins 5% dans des conditions de dilatation libre.

9. Procédé selon une quelconque des revendications précédentes, caractérisé en ce qu'on utilise une matière expansible qui est composée d'un mélange de béton contenant une quantité d'additifs suffisante pour obtenir une dilatation linéaire d'au moins 1% dans le sol comprimé.

10. Procédé selon la revendication 9, caractérisé en ce qu'on ajoute au moins 70 kg de sulfo-aluminate de calcium par mètre cube de mortier de béton.

11. Procédé selon la revendication 9 ou 10, caractérisé en ce qu'on ajoute, par mètre cube de mortier de béton, une quantité de sulfo-aluminate de calcium de l'ordre de grandeur de 1000 kg.

12. Procédé selon une quelconque des revendications précédentes, caractérisé en ce qu'on utilise un béton expansible possédant une dilatation linéaire libre de l'ordre de grandeur de 25%.

EP 0 264 998 B1

FIG. 1

FIG. 2

FIG. 3

FIG.4

FIG 5a

FIG 5b

FIG.6a

FIG. 6b

FIG.7a

FIG.7b

FIG.8a

FIG.8b

## FIG.9

## FIG.10